# EUROPEAN PATENT APPLICATION

(11) **EP 1 806 714 A1**
(43) Date of publication of application: **11.07.2007**
(21) Application number: 06000236.7
(22) Date of filing: 06.01.2006
(51) Int. Cl.: G09F 21/04, B60Q 1/50

(54) **System for displaying visual messages on a vehicle**

(71) Applicant: Reynolds, Paul Richard, 8700 Küsnacht (CH)
(72) Inventor: Reynolds, Paul Richard, 8700 Küsnacht (CH)
(74) Representative: Schneider Feldmann AG Patent- und Markenanwälte

(57) **Abstract**

A system (1) for displaying visual messages (2a) on a vehicle (15) comprises display means (2) for displaying the visual messages (2a), said display means (2) being visible from outside the vehicle (15), a control unit (3) for controlling the display means (2), and a mobile electronic device (4) which is connectable to the control unit (3). The mobile electronic device (4) comprises data storage means and means for executing software code, and is arranged for controlling the control unit (3). The operation of the display system (1) is controllable by a person within the vehicle (15), using human interface means of the mobile electronic device (4). The display system (1) is optionally able to obtain data (12') from a distributed computer system (18) with at least one data server (5) via a communication network (6) or via the internet (11).

## Description

### Technical Field

The present invention relates to a system for displaying visual messages on a vehicle, the system comprising display means for displaying the visual messages, said display means being visible from outside the vehicle; and a distributed computer system for use with a display system according to the present invention; and a software product for use with a display system according to the present invention; according to the independent claims.

### State of the Art

Car drivers often need to communicate with other drivers or traffic participants. Most often this is done by the optical and acoustical communication means present in every modem car, such as indicator, brake lights, headlamp flasher, klaxon etc. However, the information content that can be transferred using such means is very limited.

Different technical solutions have been developed until today that allow a car driver to transmit visual messages to other traffic participants.

US 4,574,269 shows a visual communicator device disposed in the rear window of a vehicle for viewing from outside the car. The semi-transparent communicator includes a message display including a LED matrix. The display unit can display a set of pre-defined text messages.

GB 2,208,956 A shows an apparatus permitting the display of a message on a vehicle fitted with a display screen. The display unit is a LED matrix which is able to display letters forming a text message, The text messages to be shown can be chosen from a set of pre-defined messages or entered individually by the driver using a keyboard.

In DE 10,061,478 A1 a badge is disclosed that can be attached to the rear screen of a car using adhesive strips. The badge has a display field for displaying text massages. The display unit can be a LED matrix or a LCD screen with optional background illumination. The text messages are entered by the driver using an input unit with a keyboard. This input unit is located on the back of the display unit or is connected by wire or radio transmission with the display unit.

Such systems for displaying visual messages on a vehicle can only handle text messages. The messages either are predefined or have to be entered by the user using a keyboard. The entering of messages with more information content, such as pictures, movies, etc. is impossible or at least extremely tedious.

### Summary of the Invention

An object of the present invention is to provide a system for displaying visual messages on a vehicle, which is able to display more complex messages that the systems disclosed in the prior art, such as pictures or movies.
Furthermore in an advantageous embodiment of such a system a user should be able to easily exchange messages with other users, and should be able to use his own personalised set of messages in different vehicles. This and other problems are solved by a display system according to the present invention, a distributed computer system for use with a display system, and a software product for use with a display system, according to the independent claims, Further advantageous embodiments are given in the dependent claims.

The display system according to the present invention comprises one or more display means that are able to display visual messages in the form of pictures, movie sequences etc. in a way that they are visible from outside the vehicle, for example by another car driver, a passer-by, or another traffic participant. The one or more display means are controlled by one or more corresponding control units, which are, at least temporarily, connected with a mobile electronic device. Said device is located within the vehicle and is able to store messages locally and to manage the operation of the one or more control units.

### Brief description of the drawings

In the following the system according to the present invention will be explicated by means of the following figures:
Figure 1 shows a perspective view on a vehicle with a display system according to the present invention.
Figure 2 schematically shows an embodiment of a display system according to the present invention.
Figure 3 schematically shows another embodiment of a display system according to the present invention.
Figure 4 shows the data flow in a possible embodiment of a display system according to the present invention.
Figure 5 shows the data flow in another possible embodiment of a display system according to the present invention.
Figure 6 shows the data flow in a further possible embodiment of a display system according to the present invention.
Figure 7 shows the data flow in dependence of time according to three different possible embodiments of a display system according to the present invention.

### Ways to implement the Invention

For the storage of complex visual messages, as for example in the form of pictures or movies, or combinations thereof, more memory space is needed than for simple text messages as known from the prior art. As a consequence in most cases the necessary data for displaying the messages cannot be directly entered by the user, since this would be far to tedious or even impossible. However, larger data files can be handled by modem mobile electronic devices such as mobile communication devices (e.g. mobile phones), portable computers, and mobile multimedia devices (e.g. iPod®). Research and development in this area is very active, and other, new types of mobile electronic devices may be broadly available in the future. Generally it can be said that there is a tendency of converging functionalities of the different types of mobile electronic devices. Thus in a display system according to the present invention the storage of data encoding visual messages, the operation, and the control of such a system is carried out by a mobile electronic device.

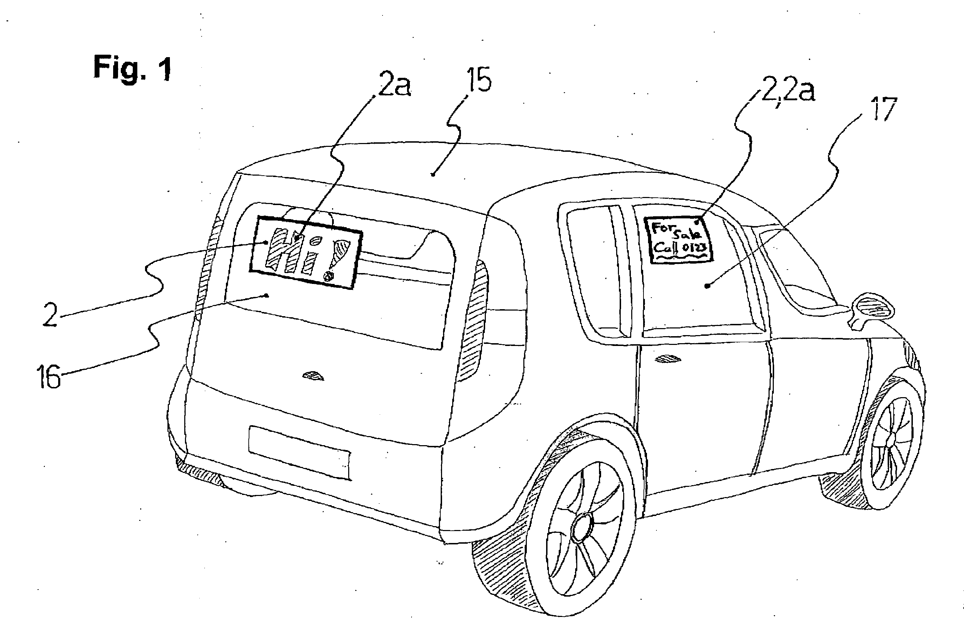

Figure 1 shows in perspective view a vehicle 15 equipped with a display system according to the present invention. A first display means 2 is arranged at the rear window 16 of the vehicle. In addition the shown embodiment of the invention equipped with an additional display means located on the side window 17. The display means 2 has to be visible from outside the car 15. For this purpose the rear window 16 is a very suitable location for the display means 2, since a person sitting in a car following the vehicle 15 can easily see the display means 2. The visual messages 2a shown on the display means 2 can be controlled by a person inside the vehicle, e.g. the driver, using the interface means of a mobile electronic device (not visible) located inside the car. The visual message displayed on the two display means 2 can be different.

As a display means 2 a liquid crystal display (LCD) panel or a light emitting diode (LED) panel can be used, for example, but also more advanced technologies such as active matrix electronic paper displays and polymer based screens may be used. The display means can be fully or partially transparent, and/or can be equipped with backlight.
A display may be mounted on any window of the vehicle, including the front window, but can also be mounted on other parts of a vehicle, for example a door. The display may have the size of the car window its mounted in, or smaller. If mounted on the front window the display means preferably should be transparent. In such a case the display means can optionally show a visual message mirror-inverted, to make it understandable for a driver in a car traveling before the vehicle with the display system. Said driver will then correctly see the visual message in his rear-view mirror.

In principle any device which is able to display two-dimensional images and can be arranged on a vehicle may be used as a display means for use in a display system according to the present invention.

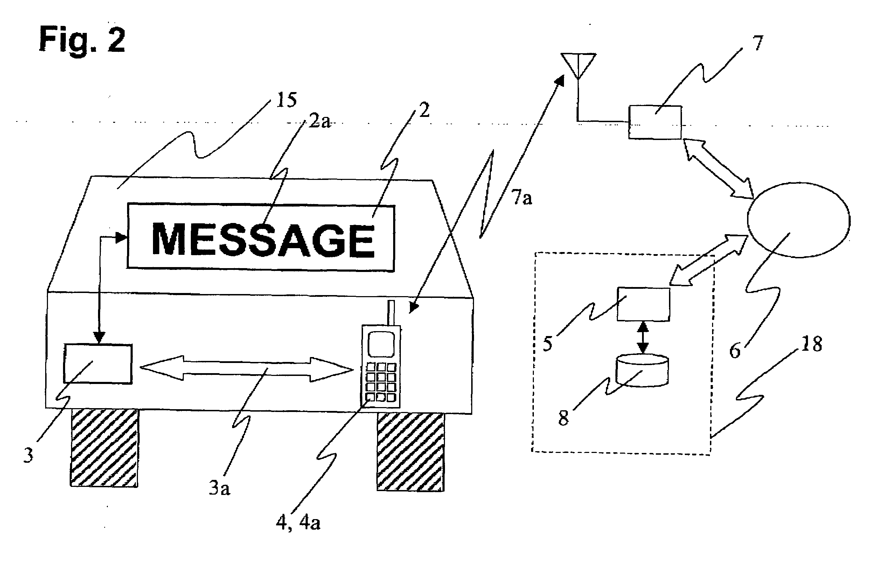

Figure 2 schematically shows a possible embodiment of a display system 1 according to the present invention. A single display means 2 is arranged on the vehicle 15. The display means 2 is driven by a control unit 3 connected to the display means 2. The control unit 3 manages the technical functions of the display means 2, including the actual displaying of a visual message 2a delivered to the control unit. The control unit 3 can also be integrated in the display means 2.

A control unit 3 can be arranged to drive more than one display means 2. Alternatively separate control units 3 may be used for separate display means 2. The display means 2 is driven directly by the control unit 3, or optionally via a driver unit that acts as an interface between control unit and display means.

The control unit 3 is connected to a mobile electronic device 4 via a local communication interface 3a. The connection can be of a temporary nature, e.g. if data or commands must be transferred, or continuing.
The local communication interface 3a may be realized as a wireless interface, such as for example the microwave based Bluetooth technology or an infrared based interface. Alternatively the connection may be a wire based parallel or serial data bus, A wire based interface is less interference-prone than a wireless interface, and may also have a broader bandwidth, but on the other side is more costly, since special cables must be laid in the vehicle. Modem vehicles, however, are often equipped with built-in serial bus networks, such as for example the CAN-bus (Controller Area Network), which can be used for connecting the control unit 3 and the mobile communication device 4.

The mobile electronic device 4, equipped with means for storing data and means for executing software code, is able to control the operation of a display system 1 according to the invention, by controlling the functions of the control unit 3. A computer program running on a microprocessor of the mobile electronic device 4 manages the transfer of data (visual messages, commands, error messages, etc.) between the mobile electronic device 4 and the control unit 3. One or more visual messages can be locally stored on the memory means of the mobile electronic device 4.
If a new user enters a vehicle 15, he may bring along his own suitably prepared mobile electronic device (4) for running the display system 1 of the vehicle.

The operation of the display system 1 can be controlled using the human interface means of the mobile electronic device 4, such as e.g. keyboard and display screen. A user can pre-view the visual messages available on the mobile electronic device 4, choose one, and enter the command for displaying the message 2a on the display means 2. The mobile electronic device 4 then transfers the visual message data to the control unit 3, together with the corresponding instructions for the control unit 3. The control unit subsequently operates the display means 2. The requested visual message is visible on the display means 2.

In a preferred embodiment the mobile electronic device 4 is a mobile communication device 4a, more specifically a mobile phone, as shown in Figure 2. which is able to wirelessly connect to a communication network 6. Such a device 4a may be for example a mobile phone or a portable computer device connectable to a WLAN base station.
In the display system 1 shown in Figure 2 the mobile communication device 4a is wirelessly connected 7a to a wireless base station 7. The base station 7 is part of a communication network 6. A distributed computer system 18 with at least one data server 5, having access to a data base 8, is also connected to the communication network 6. The display system 1 according to the present invention may now obtain data from the data server 5, via the communication network 6. These data may represent visual messages that can be displayed by the display system 1, and/or software products, which are executable on the mobile electronic device 4.
In another embodiment the display system 1 is also able to upload data to a data server 5 of a distributed computer system 18, via the communication network 6. These data may again represent visual messages.
The distributed computer system 18 can also be implemented as a single computer.

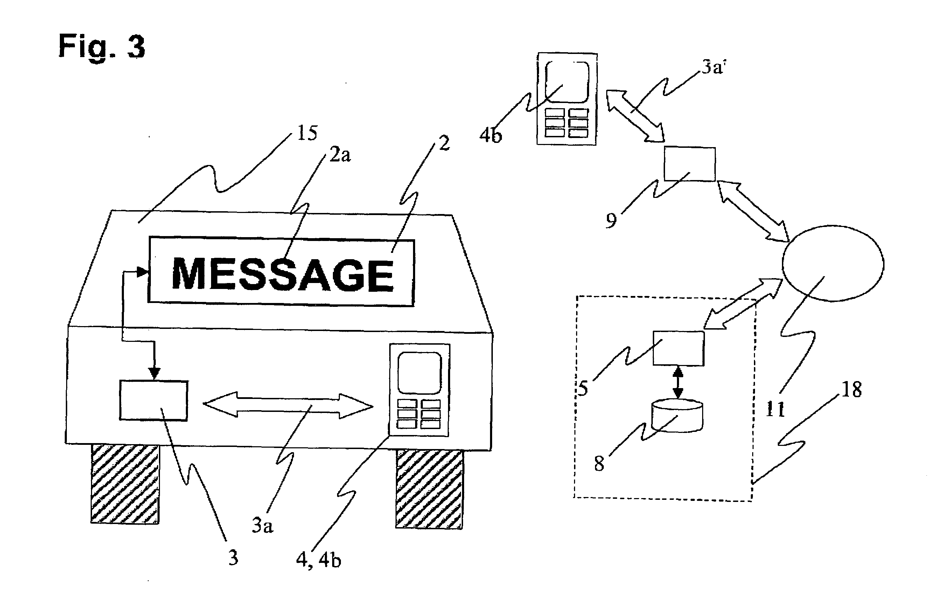

Figure 3 shows another embodiment of a display system 1 according to the present invention. The mobile electronic device 4 is a mobile multimedia device 4b, which is not connectable to a mobile communication network. A user may connect the mobile multimedia device 4b to an internet access device 9 located outside the vehicle 15. The internet access device 9 can be a computer having access to the internet 11. The local communication interface 3a' between the mobile multimedia device 4b and the internet access device 9 can be a serial bus (e.g. USB) or a wireless communication interface (e.g. Bluetooth).
At least one data server 5 of a distributed computer system 18 is accessible via the internet 11. Similar to the system shown in Figure 2 the display system 1 can download data from the distributed computer system 18, representing visual messages and/or software products, and can upload data to the data server 5.

The difference of the display system disclosed in Figure 3 to the display system disclosed in Figure 2 is primarily the way the mobile electronic device 4 gets access to the data server 5. While in the embodiment in Figure 2 the mobile electronic device 4 can directly connect to a communication network 6 using its built-in sender-receiver equipment for building up a wireless connection 7a, without the necessity of removing the device from the vehicle 15, in the embodiment in Figure 3 the device 4 must be temporarily removed from the vehicle 15 for being connected to an internet access device 9.

In other feasible embodiments of the invention it is also possible to connect a mobile communication device 4a to an internet access device 9, or to download data from the data server 5 when the mobile communication device 4a is temporarily not located in the vehicle 15. It is also possible that the mobile electronic device 4 itself has the functionality of an internet access device 9.

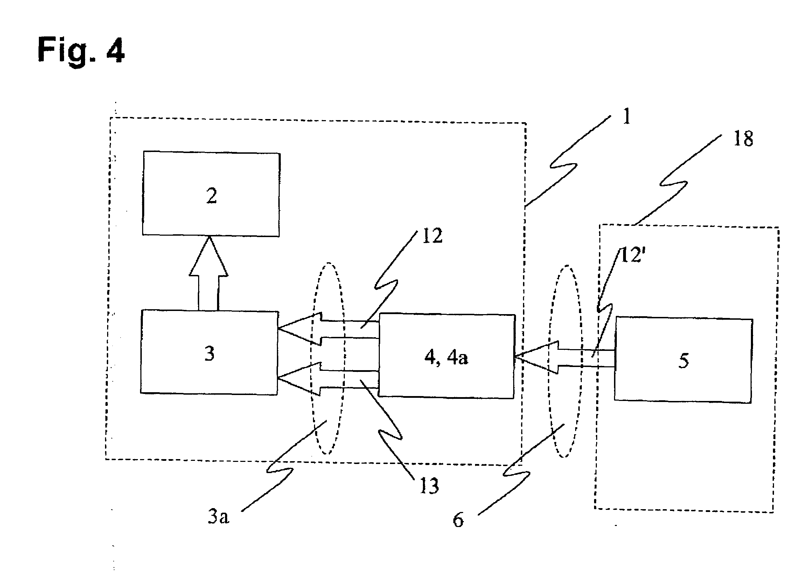

Figure 4 schematically shows the data flow in a display system 1 similar to the embodiment shown in Figure 2. Data 12' representing visual messages and/or software products are wirelessly downloaded from a data server 5 of a distributed computer system 18 to a mobile electronic device 4 In the form of a mobile communication device 4a, being part of the display system 1. On the mobile communication device 4a the data 12' are locally stored on the built-in storage means.
Based on the input of a user the mobile communication device 4a transfers visual message data 12 and operating commands 13 to the control unit 3, using the local communication interface 3a. The control unit 3 then drives the display means 2, based on the visual message data 12.
The management of the storage of visual messages on the mobile electronic device 4, the evaluation of user input, and the management of the communication between control unit 3, mobile electronic device 4, and the distributed computer system 18 is carried out by a computer software that is executed on a microprocessor of the mobile electronic device 4.

ln a further advantageous embodiment of a display system 1 messages concerning the operation of the display means 2 or the control unit 3 may be sent to the mobile electronic device 4, where they can be evaluated.
In another advantageous embodiment the control unit 3 is equipped with storage means that are able to store at least part of a visual message. Such an implementation has the advantage that the same data 12 may not have to be downloaded several times from the mobile electronic device 4 to the control unit 3, if a user returns to a previously shown visual message after temporarily displaying another visual message. This solution reduces the necessary bandwidth of the local communication interface 3a, and is especially important if a visual message requires a larger amount of data, e.g. a movie.

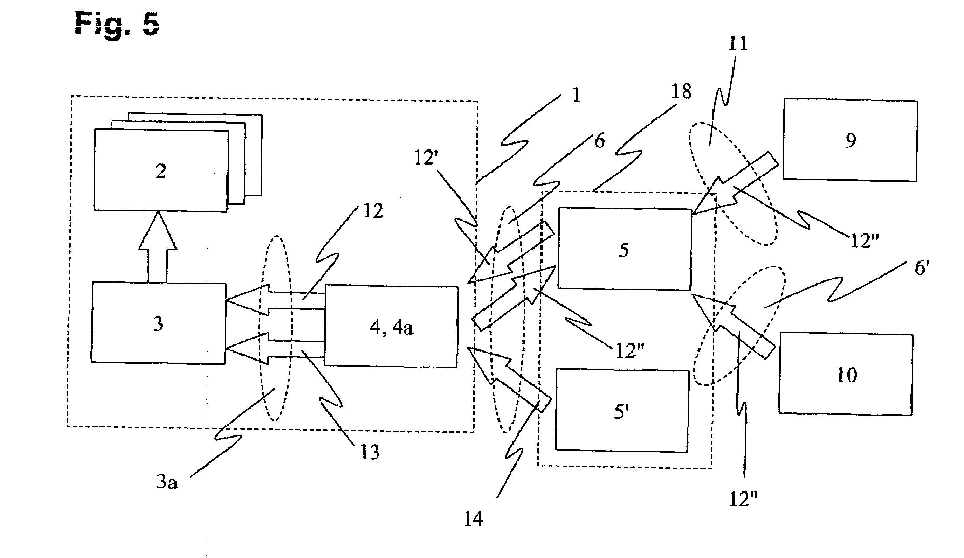

Figure 5 schematically shows the data flow in a further embodiment of a display system 1 according to the present invention. The control unit 3 is driving a multitude of display means 2. Similar to the system in Figure 4 data 12' representing visual messages can be downloaded from a first data server 5 of a distributed computer system 18, and can also be uploaded to the data server 5, via a communication network 6. In addition software products 14 can be downloaded from a second data server 5' of the same distributed computer system 18, also via the communication network 6.
Visual messages 12" can also be uploaded to the first data server 5 from other sources, that means external devices not being part of a display system 1. For example a person may photograph a scene or shoot a short movie with a mobile phone 10 with camera functionality, and subsequently upload the picture/movie data 12" to a data server 5, via a communication network 6'. This may for example be done by sending an MMS message containing the picture/movie to a particular phone number corresponding to the distributed computer system 18. Another possible solution is the use of a software product particularly designed for such a purpose. Alternatively a person may upload picture/movie data 12" via the internet 11 from an internet access device 9, e.g. a computer. For example such data can be created on a computer, or transferred from a digital camera.
The general purpose of such an embodiment is to allow the exchange of visual messages between different users, respectively different devices and data sources of a single user, by using the distributed computer system 18 as a gateway for transferring messages to a display system 1 according to the invention.

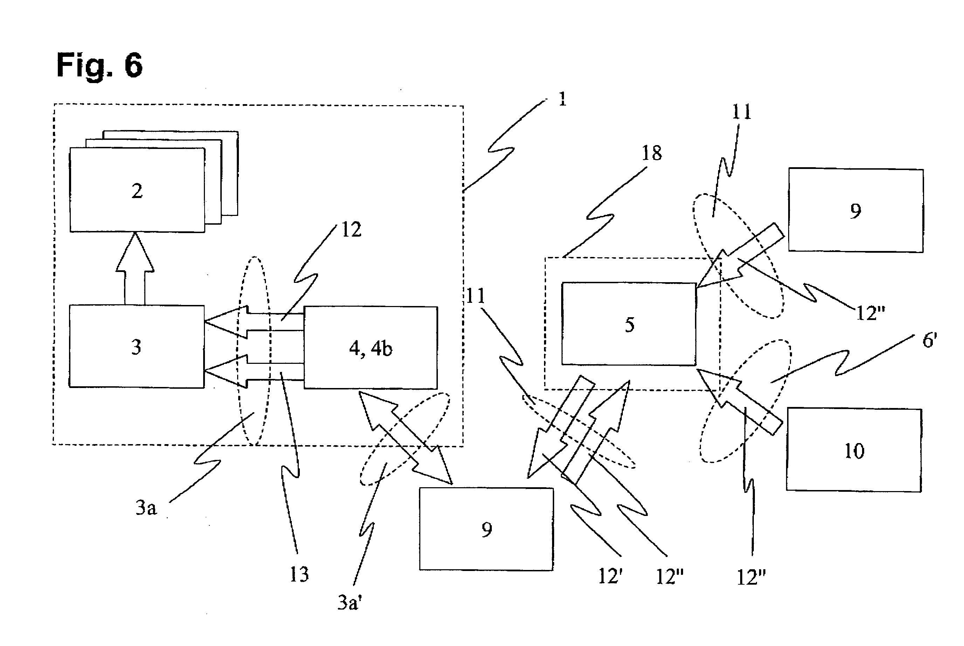

Figure 6 shows yet another embodiment of a display system 1 according to the present invention, similar to the display system shown in Figure 3. The internal data flow of the system 1 and the upload of external data 12" to the data server 5 is similar to Figure 5. In this embodiment, however, the mobile electronic device 4, being a mobile multimedia device 4b, must be connected to an internet access device 9 for getting access to the data server 5.

Different display systems according to the present invention may comprise different types of display means, different types of control units, and also different types of mobile electronic devices. It is thus of advantage to ensure compatibility between the various possible components of a display system. This allows for example to easily exchange the mobile electronic device for use in a display system in a particular vehicle, or similarly to allow the use of a particular mobile electronic device as a component in display systems in various vehicles.
At least partially such an advantageous solution can be achieved by standardizing the data exchange protocols between the control units 3 and the mobile electronic devices 4. In addition the software product for operating a display system 1 can be adapted to the components actually present in that particular display system. For this purpose a suitable set of software components can be downloaded from a distributed computer system 18, as already indicated in the discussion above.

For compatibility reasons the data format for encoding visual messages to be displayed should preferably be standardised. There exists a considerable amount of different types of data formats for the compressed and uncompressed description of pictures and movies (i.e. GIF, JPEG, TIFF, RAW, MOV, MPEG and many others). Although it is possible to download such data onto a mobile electronic device being part of a display system according to the present invention, and to convert the files locally on the mobile electronic device, such an approach potentially has certain drawbacks concerning download time, bandwidth, and memory size. Although such problems might no longer be relevant for future generations of mobile electronic devices, it is nevertheless preferable to convert the data encoding the visual messages to a data format adapted to the specific requirements of a display system before downloading them to said system. This task may be done centrally on the distributed computer system 18, after the uploading of a visual message from a mobile electronic device 4, 4a, 4b, an external mobile communication device 10, or an internet access device 9. The converted visual message may then be stored on a data base 8 for later use and/or downloaded to the mobile electronic device 4, 4a, 4b of the display system 1.

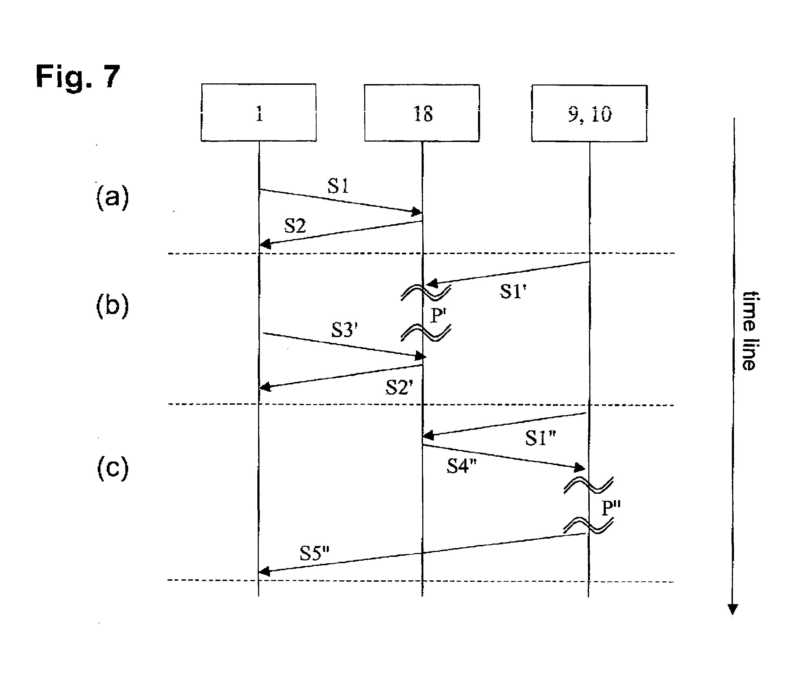

Figure 7 further exemplifies the time line of the data flow from and to a display system 1 according to the present invention, for three different cases (a), (b), and (c).
In case (a) in a first step S1 data representing one or more visual messages are uploaded from a display system 1 to a distributed computer system 18, where they are converted into a suitable data format. In a second step S2 the converted visual messages are downloaded back to the display system 1.
Case (b) describes a case where in a first step S1' one or more visual messages are uploaded from an external device, e.g. an internet access device 9 or a mobile communication device 10, to the distributed computer system 18. On the distributed computer system 18 it can be converted to the suitable data format, and then stored during an indefinite time period P' for later use in a display system 1. Later on a display system 1 sends in a step S3' a request for obtaining the visual message from the distributed computer system 18. In a next step S2' the visual message is downloaded to the display system 1.
A further possible embodiment, which was not discussed so far, is disclosed in case (c). In a first step S1" a visual message is uploaded from an external device 9, 10 to a distributed computer system 18, where it is converted, and downloaded back to the external device 9, 10, in a second step S4". On said external device it is stored during an indefinite time period P" for later use. At any time the converted visual message data then may be transferred in a step S5" from the external device 9, 11 to a display system 1 according to the invention.

A person skilled in the art will not only be able to implement the different embodiments of a display system 1 according to the present invention, as disclosed in the description above, he will also easily recognise the he can combine the characteristics of the different embodiments to implement other alternative embodiments of a display system 1 according to the present invention. The description furthermore clearly shows that a display system 1 according to the present invention is susceptible to industrial application.

### Reference numerals:

- 1: display system
- 2: display means
- 2a: visual message
- 3: control unit
- 3a, 3a: local communication interface
- 4: mobile electronic device
- 4a: mobile communication device
- 4b: mobile multimedia device
- 5, 5': data server
- 6, 6': communication network
- 7: wireless base station
- 7a: wireless connection
- 8: data base
- 9: internet access device
- 10: mobile communication device
- 11: internet
- 12, 12', 12": data
- 13: commands
- 14: software product
- 15: vehicle
- 16: rear window
- 17: side window
- 18: distributed computer system

## Claims

1. A system (1) for displaying visual messages (2a) on a vehicle (15), the system (1) comprising display means (2) for displaying the visual messages (2a), said display means (2) being visible from outside the vehicle (15),
**characterised in**
**that** the system (1) comprises a control unit (3) for controlling the display means (2) and a mobile electronic device (4) which is connectable to the control unit (3), wherein the mobile electronic device (4) comprises data storage means and means for executing software code, and is arranged for controlling the control unit (3).

2. The system according to claim 1, **characterised in that**
the operation of the system (1) is controllable by a person within the vehicle (15), using human interface means of the mobile electronic device (4).

3. The system according to claim 1, **characterised in that**
data (12) and/or commands (13) are transferable from the mobile electronic device (4) to the control unit (3) via a local communication interface (3a).

4. The system according to claim 3, **characterised in that**
the local communication interface (3a) is a wire based and/or a wireless communication interface.

5. The system according to any of claims 1 to 4, **characterised in that**
the visual message (2a) is a text sequence, a picture, a movie, or a combination thereof.

6. The system according to any of claims 1 to 5, **characterised in that**
the mobile electronic device (4) is a mobile communication device (4a) or a mobile multimedia device (4b).

7. The system according to claim 6, **characterised in that**
the mobile electronic device (4) is a mobile communication device (4a), and that the system is able to obtain data (12') from a distributed computer system (18) with at least one data server (5) via a communication network (6) to which the mobile communication device (4a) is connectable.

8. The system according to any of claims 1 to 7, **characterised in that**
the mobile electronic device (4) is connectable to an internet access device (9), and that the system is able to obtain data (12') from a distributed computer system (18) with at least one data server (5) via the internet (11).

9. The system according to any of claims 6 to 8, **characterised in that**
the data (12') obtainable from the distributed computer system (18) represent visual messages and/or executable software products.

10. The system according to any of claims 6 to 9, **characterised in that** the system (1) is able to upload data (12") to the distributed computer system (18).

11. The system according to claim 10, **characterised in that**
the uploadable data (12") are encoding visual messages.

12. The system according to any of claims 1 to 11, **characterised in that**
a software product is executable on the mobile electronic device (4),
wherein the software product is able
- to manage the storage of one or more visual messages on said mobile electronic device (4);
- to evaluate user input received by human interface means of said mobile electronic device (4); and
- to manage the communication between said mobile electronic device (4) and the control unit (3).

13. The system according to claim 12, referring back to any of claims 7 to 9,
**characterised in that** the software product is able to manage the communication with the distributed computer system (18).

14. The system according to claim 12 or 13, **characterised in that** the software product is able to change the data of a visual message from one data format to another data format.

15. A distributed computer system (18) for use with a system (1) for displaying visual messages (2a) on a vehicle (15) according to any of claims 7 to 11, 13, and 14, wherein the computer system (18) comprises at least one data server **(5), characterised in that**
the computer system (18) is able to receive data (12") from and to send data (12') to the display system (1), the data (12', 12") representing commands, pictures, images, movies, software products or a combination thereof, and that the computer system (18) is able to store data (12', 12").

16. The computer system according to claim 15, **characterised in that**
the computer system (18) is able to receive data (12") from external devices (9, 10) that are not part of a display system (1), the data (12") representing pictures, images, movies, or a combination thereof, and that the computer system is able to store the data (12', 12").

17. The computer system according to claim 15 or 16, **characterised in that** the computer system (18) is able to convert data (12, 12") from one data format to another data format.

18. A software product, comprising the software functions used in the display system (1) as claimed in any of claims 12 to 14.

19. A method for displaying visual messages (2a) on a vehicle (15) with a system (1) according to claims 1 to 14, **characterised in that**
- on request of a user of the system (1), data (12') representing one or more visual messages (2a) are downloaded from a data server (5) of a distributed computer system (18) to a mobile electronic device (4) of the system (1);
- the downloaded data (12') are temporarily or permanently stored on the mobile electronic device (4);
- on request of a user of the system (1), the downloaded and stored data (12') are transferred from the mobile electronic device (4) to a control unit (3) of the system (1); and a visual message (2a) represented by the data (12') is displayed on the vehicle (15).

20. The method according to claim 19, **characterised In that**
data (12") representing one or more visual messages (2a) are uploaded to the data server (5) from an electronic device, prior to a download of the data (12') to the mobile electronic device (4) of the system (1);
whereas the electronic device is the mobile electronic device (4), an internet access device (9), or a mobile communication device (10) not being part of the system (1).

21. The method according to claim 19 or 20, **characterised In that** the transfer of data (12') between the data server (5) and the mobile electronic device (4) is carried out via an internet access device (9).

22. The method according to any of claims 19 to 21, **characterised in that** the data format of the data (12', 12") representing visual messages (2a) is changed prior to the download to a mobile electronic device (4) of the system (1).
